# EUROPÄISCHE PATENTSCHRIFT

(11) **EP 1 462 322 B1**
(45) Veröffentlichungstag und Bekanntmachung des Hinweises auf die Patenterteilung: **14.01.2009**
(21) Anmeldenummer: 04005932.1
(22) Anmeldetag: 12.03.2004
(51) Int. Cl.: B60R 21/20

(54) **Befestigung eines Airbaggehäuses**
Air bag container fastening means
Dispositif de fixation d'un boîtier de sac gonflable

(30) Priorität: 22.03.2003 DE 10312947
(43) Veröffentlichungstag der Anmeldung: 29.09.2004
(73) Patentinhaber: ADAM OPEL AG, 65423 Rüsselsheim (DE)
(72) Erfinder: Rick, Ulrich, 55595 Roxheim (DE)

(56) Entgegenhaltungen:
- EP-A- 0 710 590
- DE-A- 19 617 763
- DE-A- 19 618 817
- DE-A- 19 833 552
- US-A- 5 662 350

## Beschreibung

Die Erfindung bezieht sich auf ein Airbaggehäuse nach Anspruch 1 und ein Kraftfahrzeug nach Anspruch 12.

Ein gattungsgemäßes Airbaggehäuse ist aus der EP 0 710 590 A1 bekannt.

Die DE 43 38 666 C2 offenbart ein Airbaggehäuse, insbesondere ein Gehäuse für einen Beifahrer-Airbag, das zur Befestigung an einem der Fahrzeugstruktur zugeordneten Querträger unterhalb der Armaturentafel eines Kraftfahrzeuges ausgebildet ist. Das Airbaggehäuse ist an seiner Bodenseite mit mindestens einem zu einer nach oben weisenden Fläche des Querträgers ragenden Träger sowie mit einer am unteren Bereich des Querträgers anliegenden Anlagefläche versehen, wobei der Träger mit einem oder mehreren hakenartigen Zapfen in Öffnungen in der nach oben weisenden Fläche des Querträgers eingreift und die Anlagefläche des Gehäuses mit dem unteren Bereich des Querträgers verbunden ist. Durch die auskragende Ausbildung des Trägers weist das Airbaggehäuse einen relativ großen Aufbau auf und der Träger wird während des Betriebs des Kraftfahrzeuges durch Vibrationen und Schwingungen belastet, weshalb Verrippungen sowie relativ große Wanddicken erforderlich sind, durch die das Airbaggehäuse ein großes Gewicht aufweist. Bei diesem Airbaggehäuse verläuft die Längsachse der Befestigungsschrauben im Wesentlichen in gleicher Richtung wie die Einhakrichtung der Zapfen, nämlich in Richtung eines Bodens des Kraftfahrzeuges. Hierdurch ist es erforderlich, dass das Montagepersonal zum Anziehen der Schrauben eine unergonomische Haltung einnehmen muss. Darüber hinaus ist ein relativ großer Einbauraum für das Airbaggehäuse erforderlich, da bei einer Demontage und erneuten Montage im Servicefall die hakenartigen Zapfen durch eine vertikale Verschiebung des Airbaggehäuses zu lösen sind.

Darüber hinaus beschreibt die DE 197 45 894 A1 eine Befestigung eines Airbaggehäuses mittels einer Schraubverbindung an einem fahrzeugfesten Trägerteil, insbesondere einem unterhalb der Armaturentafel angeordneten Querträger, wobei die Schraubverbindung eine am Trägerteil bzw. am Airbaggehäuse angeordnete Gewindebohrung aufweist. Die Gewindebohrung ist in einer durch plastische Verformung hergestellten zylindrischen Buchse ausgebildet. Das Airbaggehäuse ist einteilig mit einem oberen und einem unteren Haltearm ausgeführt, die jeweils lösbar mit dem Querträger verbunden sind. Zur Befestigung des oberen Haltearms am Querträger ist an demselben ein Zapfen angeformt, der in eine entsprechende Öffnung in der Wandung des Querträgers hakenartig eingreift. Die Verbindung zwischen dem unteren Haltearm und dem Querträger erfolgt über die Schraubverbindung. Die Öffnung für den Zapfen und die Gewindebohrung für die Schraubverbindung sind senkrecht zueinander ausgerichtet. Da zunächst der Zapfen von oben in die zugeordnete Öffnung des Querträgers einzuhängen ist, benötigt das Airbaggehäuse einen relativ großen Abstand zur zugeordneten Armaturentafel. Die zuvor beschriebene Befestigung des Airbaggehäuses ist auch bei einem Beifahrer-Airbag-Modul gemäß der DE 196 18 817 A1 vorgesehen.

Es ist Aufgabe der Erfindung, ein Airbaggehäuse der eingangs genannten Art zu schaffen, das bei einem kleinen Einbauraum und in einer einfach zu bewerkstelligenden Montage sicher und lagestabil in einem Kraftfahrzeug fixiert ist.

Erfindungsgemäß wird die Aufgabe durch die Merkmale der Ansprüche 1 und 12 gelöst.

Aufgrund dieser Maßnahmen wird das Airbaggehäuse bei seiner Montage unter einer geradlinigen, im Wesentlichen horizontalen Richtung an dem Trägerteil festgelegt. Eine Demontage des Airbaggehäuses, insbesondere bei einer in das Kraftfahrzeug eingebauten Armaturentafel, erfolgt unter einer Schwenkbewegung. Da hierbei keine vertikalen Verschiebungen des Airbaggehäuses erforderlich sind, kann dieses in einem relativ kleinen Einbauraum Platz sparend untergebracht werden und ist dabei an den Befestigungsstellen sicher und zuverlässig befestigt.

Vorzugsweise sind die Befestigungsstellen als Steckverbindung und/oder als Schraubverbindung ausgebildet. Hierbei wird das Airbaggehäuse beispielsweise zunächst mittels der Steckverbindung an dem Trägerteil gehalten und anschließend durch die Schraubverbindung endgültig befestigt.

Nach einer vorteilhaften Weiterbildung des Erfindungsgedankens ist an dem Boden des Airbaggehäuses ein der einen Längsseite zugeordneter Halteansatz mit mindestens einer Bohrung für die Schraubverbindung und ein der gegenüberliegenden Längsseite zugeordneter, parallel zur Achse der Bohrung ausgerichteter Zentrierzapfen für die Steckverbindung befestigt. Die direkte Zuordnung des mindestens einen Zentrierzapfens zu der Längsseite des Airbaggehäuses reduziert dessen Belastung aufgrund von Schwingungen bzw. Vibrationen während des Fahrtbetriebs des Kraftfahrzeuges. Gegenüber den aus dem Stand der Technik bekannten über Träger mit dem Airbaggehäuse verbundenen Zapfen bedeutet dies, dass sowohl der Zentrierzapfen als auch das Airbaggehäuse bei einer relativ geringen Wanddicke sowie einer Reduzierung der Verrippungen kompakt und leicht aufgebaut sind.

Zweckmäßigerweise sind der Halteansatz und der Zentrierzapfen einstückig mit dem Airbaggehäuse verbunden. Der Halteansatz und der mindestens eine Zentrierzapfen können gemeinsam mit dem Airbaggehäuse im Spritzgussverfahren aus einem, gegebenenfalls mit festigkeitssteigernden Stoffen, wie beispielsweise Glasfasern, gefüllten Kunststoff oder auch einer gießfähigen Leichtmetalllegierung gefertigt werden.

Damit die Schraubverbindung zur Montage bzw. Demontage des Airbaggehäuses leicht zugänglich ist, ist bevorzugt die Halteleiste in einem im montierten Zustand des Airbaggehäuses zu einem Fußraum des Kraftfahrzeuges weisenden Bereich des Bodens befestigt. Vorzugsweise erstreckt sich der Halteansatz senkrecht zum Boden. Zur Verstärkung der Schraubverbindung ist in die Bohrung des Halteansatzes eine Buchse eingesetzt.

Um die Montage des Airbaggehäuses relativ einfach zu gestalten, ist der Zentrierzapfen in einem Bereich des Bodens angeformt, der im eingebauten Zustand des Airbaggehäuses in Richtung der Windschutzscheibe weist. Bei der Montage des Airbaggehäuses wird zunächst der Zentrierzapfen an dem Trägerteil in Eingriff gebracht, so dass das Airbaggehäuse fixiert ist. Aufgrund des Eigengewichts des Airbaggehäuses liegt der Halteansatz an dem Trägerteil an und die Schraubverbindung kann befestigt werden. Damit ist ein Abgleiten des Airbaggehäuses von dem Trägerteil bzw. ein zu Ausschuss führendes Fallen des Airbaggehäuses während der Montage nahezu ausgeschlossen.

Ist die den Zentrierzapfen bodenseitig aufweisende Längsseite derart parallel und beabstandet zu einer einen Aufnahmeraum für einen Airbag begrenzenden längsseitigen Gehäusewandung ausgeformt, dass sich das freie Ende des Zentrierzapfens in einer Ebene mit der zugeordneten Gehäusewandung befindet, ragt der Zentrierzapfen nicht über die äußeren Abmessungen des Aufnahmeraums hinaus und eine leichte Montage und Demontage des Airbaggehäuses ist im Servicefall möglich, da nach dem Ausbau eines Handschuhkastens Befestigungsschrauben der Schraubverbindungen des Airbaggehäuses leicht zugängig sind und das Airbaggehäuse nach dem Lösen der Schrauben ohne eine vertikale Verschiebung durch eine Dreh- bzw. Schwenkbewegung oder eine horizontale Verlagerung von dem Trägerteil gelöst wird. Im Weiteren wirkt sich diese Anordnung des Zentrierzapfens vorteilhaft auf die Größe des Einbauraums aus. Zweckmäßigerweise sind zumindest zwei zueinander beabstandete Zentrierzapfen vorgesehen.

Um das Airbaggehäuse während seiner Montage in seiner Verschraubungsposition zu halten, weist das Airbaggehäuse an seinem Boden mindestens eine Haltenase auf, die in eine korrespondierende Öffnung des Trägerteils eingreift. Die Haltenase greift formschlüssig in die Öffnung ein und verhindert ein Verrutschen oder Abgleiten des Airbaggehäuses aufgrund seiner Ausrichtung sowie seines Eigengewichtes während des Verschraubens.

Zur lagestabilen und sicheren Befestigung des Airbaggehäuses ist zweckmäßigerweise das im Querschnitt zylindrische Trägerteil mit einem Haltewinkel für das Airbaggehäuse versehen.

Vorteilhafterweise ist der dem Zentrierzapfen zugeordnete Schenkel des Haltewinkels doppelwandig ausgebildet, wobei sich die eine Wandung vom Trägerteil ausgehend bis unterhalb der Gehäusewandung erstreckt und rechtwinklig in einen Abstandssteg mündet, an den sich die andere mindestens eine Zentrieröffnung für den Zentrierzapfen aufweisende, in Richtung des Trägerteils verlaufende Wandung anschließt, die in einen sich über den Durchmesser des Trägerteils erstreckenden mit der Öffnung für die Haltenase versehenen Steg mündet, an den sich der parallel zur Halteleiste verlaufende Schenkel anschließt, der über eine Abkröpfung an dem Trägerteil festgelegt ist. Zweckmäßigerweise ist der dem Halteansatz zugewandte Schenkel mit mindestens einer Gewindebohrung für die Schraubverbindung versehen. Für eine besonders stabile Ausbildung des Halteansatzes kann die Anzahl der Schraubverbindungen bis auf eine reduziert werden.

Vorzugsweise weist der dem Halteansatz zugeordnete Schenkel auf der dem Trägerteil zugewandten Seite mindestens eine Schweißmutter oder eine Nietmutter für die Schraubverbindung auf. Somit wirkt sich die Schweiß- oder Nietmutter nicht störend auf die Anlagefläche zwischen dem Halteansatz und dem Trägerteil aus.

Bevorzugt ist der Haltewinkel unlösbar an dem Trägerteil befestigt ist. Der Haltewinkel kann beispielsweise mit dem Trägerteil verschweißt werden. Zur Vermeidung von störenden Geräuschen und der Übertragung von Schwingungen sowie zum Toleranzausgleich ist zwischen dem Haltewinkel und dem Airbaggehäuse im Bereich des Zentrierzapfens ein elastisches Material angeordnet.

Zweckmäßigerweise sind die Befestigungsachsen der Befestigungsstellen in einem Winkel zwischen 0° und 45° zu einer durch eine Fahrebene aufgespannten Horizontalen ausgerichtet. Damit ist die Montage des Airbaggehäuses an dem Trägerteil sowohl in einer horizontalen Richtung als auch schräg ausgerichtet zu bewerkstelligen, wobei die Ausrichtung der Befestigungsachsen in Abhängigkeit sowohl von dem Platzangebot als auch von der Verwendung des Airbaggehäuses, nämlich als Beifahrer- oder Knie-Airbaggehäuse, und damit der Schussrichtung des Airbags abhängig ist.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigen:
- Fig. 1: eine Schnittdarstellung in Fahrzeuglängsrichtung im Bereich eines Airbaggehäuses nach der Erfindung und
- Fig. 2: eine Darstellung der Montage bzw. Demontage des Airbaggehäuses nach Fig. 1 in einer alternativen Ausgestaltung.

Unterhalb einer Armaturentafel 1 eines Kraftfahrzeuges ist ein als Querträger 2 ausgebildetes Trägerteil 3 angeordnet, wobei sich der Querträger 2 zwischen zwei A-Säulen des Kraftfahrzeuges erstreckt und dort festgelegt ist. Der im Querschnitt zylindrische Querträger 2 ist mit einem Haltewinkel 4 für ein im Längsschnitt im Wesentlichen rechteckförmiges Airbaggehäuse 5 versehen, das zwischen Gehäusewandungen 6 einen Aufnahmeraum 7 für einen Airbag aufweist. An den Aufnahmeraum 7 angrenzend ist ein Freiraum 8 für einen Gasgenerator vorgesehen und oberhalb des Aufnahmeraumes 7 weist die Armaturentafel 1 eine Airbagabdeckung 9 auf. Das Airbaggehäuse 5 ist an Befestigungsstellen 35 an dem Haltewinkel 4 festgelegt, wobei Befestigungsachsen 36 der Befestigungsstellen parallel zueinander und rechtwinklig zu einer Schussrichtung eines Airbags verlaufen. Der Haltewinkel 4 erstreckt sich über die gesamte Länge des Airbaggehäuses 5 und ist mit einem doppelwandigen Schenkel 10 versehen, dessen eine Wandung 11 sich ausgehend von dem Querträger 2 bis unterhalb der zugeordneten Gehäusewandung 6 erstreckt und rechtwinklig in einen Abstandssteg 12 mündet, an den sich die andere Wandung 13 anschließt. Diese Wandung 13 mündet in einen sich über den Durchmesser des Querträgers 2 erstreckenden Steg 14, an den sich ein parallel zu einem Halteansatz 15 des Airbaggehäuses 5 ausgerichteter Schenkel 16 anschließt, der über eine Abkröpfung 34 an dem Querträger 2 festgelegt ist.

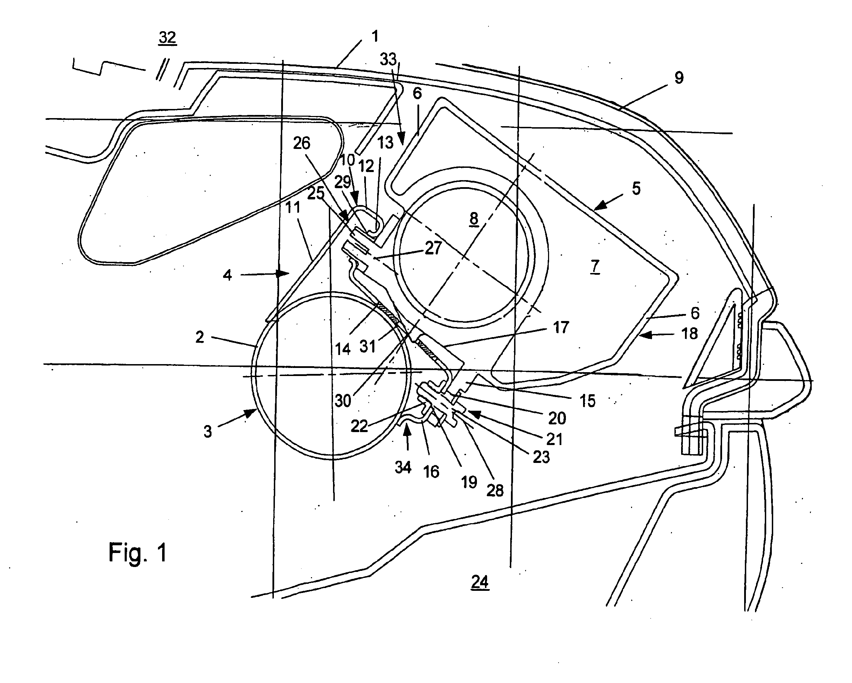

An einem Boden 17 des Airbaggehäuses 5 ist parallel zu den Gehäusewandungen 6 der sich parallel zu der einen Längsseite 18 des Airbaggehäuses 5 erstreckende Halteansatz 15 angeformt. In den Halteansatz 15 ist eine Bohrung 19 mit einer eingesetzten Buchse 20 eingelassen. Zur Herstellung einer Schraubverbindung 21 weist der dem Halteansatz 15 zugewandte Schenkel 16 des Haltewinkels 4 eine Schweißmutter 22 auf, in die die in die Dämpfungsbuchse 20 eingesetzte Schraube 23 eingreift. Um die Schraube 23 bei der Montage bzw. Demontage des Airbaggehäuses 5 relativ leicht erreichen zu können, ist der Halteansatz 15 in einem zu einem Fußraum 24 des Kraftfahrzeuges weisenden Bereich des Bodens 17 senkrecht zu diesem befestigt. An der dem Halteansatz 15 gegenüberliegenden Längsseite 33 des Airbaggehäuses 5 sind zueinander beabstandete Zentrierzapfen 25 für Steckverbindungen 26 ausgebildet. Eine Längsachse 27 der Zentrierzapfen 25 ist parallel zu einer Achse 28 der Bohrungen 19 sowie damit der Schrauben 23 ausgerichtet und repräsentiert die Befestigungsachse 36. Die Zentrierzapfen 25 greifen in Zentrieröffnungen 29 ein, die in die zum Airbaggehäuse 5 orientierte Wandung 13 des doppelwandigen Schenkels 10 des Haltewinkels 4 eingelassen sind. Um eine vibrationsbedingte Geräuschentwicklung sowie eine Schwingungsübertragung zu vermeiden und gleichzeitig einen Toleranzausgleich bereitzustellen, ist im Bereich der Zentrierzapfen 25 ein elastisches Material 37 vorgesehen, das sich zwischen den Zentrierzapfen 25 und den Zentrieröffnungen 29 sowie zwischen dem Airbaggehäuse 5 und der benachbarten Wandung 13 des Haltewinkels 4 erstreckt. Gemäß Fig. 1 ist zwischen den beiden Längsseiten 18, 33 des Airbaggehäuses 5 an dessen Boden 17 eine Haltenase 30 im Wesentlichen mittig angeordnet, die in eine korrespondierende Öffnung 31 in dem Steg 14 des Haltewinkels 4 formschlüssig eingreift. Um eine kompakte Bauform des Airbaggehäuses 5 bereitzustellen, ist die Zentrierzapfen 25 tragende Längsseite 18 des Bodens 17 des Airbaggehäuses 5 um die Länge der Zentrierzapfen 25 zur zugeordneten längsseitigen Gehäusewandung 6 zurückgesetzt, so dass die freien Enden der Zentrierzapfen 25 in einer Ebene mit der zugeordneten Gehäusewandung 6 verlaufen.

Bei der Montage des Airbaggehäuses 5 wird dasselbe vom Fußraum 24 her in Richtung einer Windschutzscheibe 32 verlagert, so dass die Zentrierzapfen 25 in die Zentrieröffnungen 29 eingreifen. Aufgrund seines Eigengewichtes liegt das Airbaggehäuse 5 mit der Haltenase 30 in der Öffnung 31 des Haltewinkels 4 ein und der Halteansatz 15 gelangt an dem zugeordneten Schenkel 16 des Haltewinkels zur Anlage. Daraufhin wird das Airbaggehäuse 5 mit dem Haltewinkel 4 des Querträgers 2 verschraubt. Die Demontage des Airbaggehäuses 5 erfolgt in umgekehrter Richtung.

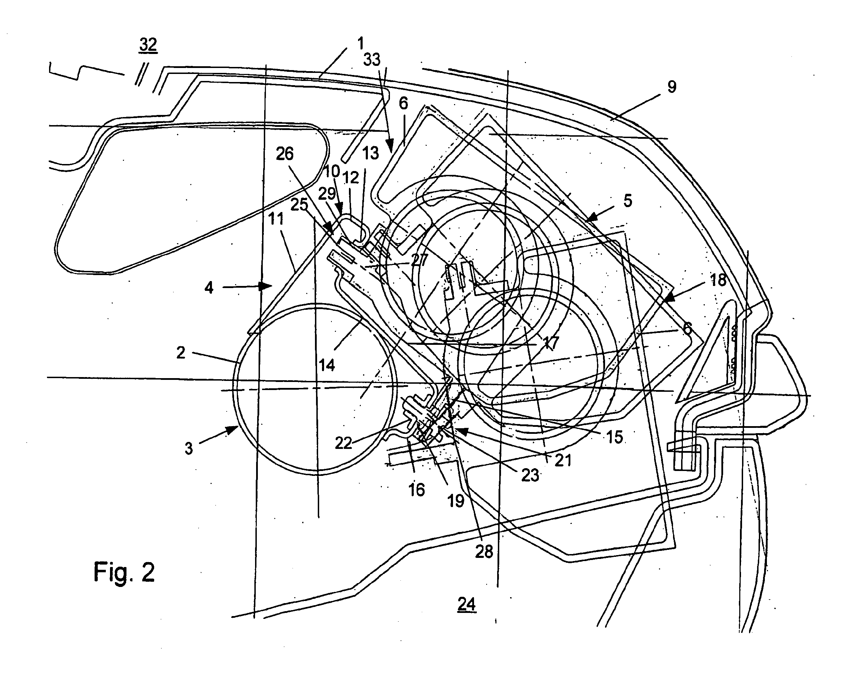

Das Airbaggehäuse 5 nach Fig. 2 ist nahezu identisch mit dem Airbaggehäuse 5 gemäß Fig. 1, jedoch wurde auf die bodenseitige Ausformung der Haltenase 30 verzichtet.

### Bezugszeichenliste

- 1.: Armaturentafel
- 2.: Querträger
- 3.: Trägerteil
- 4.: Haltewinkel
- 5.: Airbaggehäuse
- 6.: Gehäusewandung
- 7.: Aufnahmeraum
- 8.: Freiraum
- 9.: Airbag-Abdeckung
- 10.: Schenkel
- 11.: Wandung
- 12.: Abstandssteg
- 13.: Wandung
- 14.: Steg
- 15.: Halteleiste
- 16.: Schenkel
- 17.: Boden
- 18.: Längsseite
- 19.: Bohrung
- 20.: Dämpfungsbuchse
- 21.: Schraubverbindung
- 22.: Schweißmutter
- 23.: Schraube
- 24.: Fußraum
- 25.: Rastzapfen
- 26.: Steckverbindung
- 27.: Längsachse
- 28.: Achse
- 29.: Rastöffnung
- 30.: Haltenase
- 31.: Öffnung
- 32.: Windschutzscheibe
- 33.: Längsseite
- 34.: Abkröpfung
- 35.: Befestigungsstelle
- 36.: Befestigungsachse
- 37.: Material

## Patentansprüche

1. Airbaggehäuse, das zur karosserieseitigen Befestigung an mindestens zwei zueinander beabstandeten Befestigungsstellen (35) an einem unterhalb einer Armaturentafel (1) eines Kraftfahrzeuges angeordneten als Querträger (2) ausgebildeten Trägerteil (3) ausgebildet ist, wobei die als Steckverbindung (26) und/oder Schraubverbindung (25) ausgebildeten Befestigungsstellen (35) derart ausgerichtet sind, dass ihre Befestigungsachsen (36) parallel zueinander und rechtwinklig zu einer Schussrichtung eines Airbags verlaufen, **dadurch gekennzeichnet, dass** das Airbaggehäuse (5) an seinem Boden (17) mindestens eine Haltenase (30) aufweist, die in eine korrespondierende Öffnung (31) des Trägerteils (3) eingreift.

2. Airbaggehäuse nach Anspruch 1, **dadurch gekennzeichnet, dass** die Befestigungsstellen (35) als Steckverbindung (26) und/oder Schraubverbindung (25) ausgebildet sind.

3. Airbaggehäuse nach einem der Ansprüche 1 oder 2, **dadurch gekennzeichnet, dass** an dem Boden (17) des Airbaggehäuses (5) ein der einen Längsseite (18) zugeordneter Halteansatz (15) mit mindestens einer Bohrung (19) für die Schraubverbindung (21) und ein der gegenüberliegenden Längsseite (3) zugeordneter, parallel zur Achse (28) der Bohrung (19) ausgerichteter Zentrierzapfen (25) für die Steckverbindung (26) befestigt ist.

4. Airbaggehäuse nach Anspruch 1, wobei an dem Boden (17) des Airbaggehäuses (5) ein der einen Längsseite (18) zugeordneter Halteansatz (15) mit mindestens einer Bohrung (19) für die Schraubverbindung (21) und ein der gegenüberliegenden Längsseite (3) zugeordneter, parallel zur Achse (28) der Bohrung (19) ausgerichteter Zentrierzapfen (25) für die Steckverbindung (26) befestigt ist, **dadurch gekennzeichnet, dass** die den in einem Bereich des Bodens (17) angeformten Zentrierzapfen (25) aufweisende Längsseite (33) derart parallel und zurückliegend beabstandet zu einer einen Aufnahmeraum (7) für einen Airbag begrenzenden längsseitigen Gehäusewandung (6) ausgeformt ist, dass sich das freie Ende des Zentrierzapfens (25) in einer Ebene mit der zugeordneten Gehäusewandung (6) befindet.

5. Airbaggehäuse nach einem der Ansprüche 1 bis 4, **dadurch gekennzeichnet, dass** der Halteansatz (15) und der Zentrierzapfen (25) einstückig mit dem Airbaggehäuse (5) verbunden sind.

6. Airbaggehäuse nach einem der Ansprüche 1 bis 5, **dadurch gekennzeichnet, dass** sich der Halteansatz (15) parallel und zurückspringend beabstandet zu der zugeordneten längsseitigen Gehäusewandung (6) des Airbaggehäuses (5) erstreckt und vom dem Bodens (17) abgeht.

7. Airbaggehäuse nach einem der Ansprüche 1 bis 6, **dadurch gekennzeichnet, dass** sich der Halteansatz (15) senkrecht zum Boden (17) erstreckt.

8. Airbaggehäuse nach einem der Ansprüche 1 bis 7, **dadurch gekennzeichnet, dass** in die Bohrung des Halteansatzes (15) eine Buchse (20) eingesetzt ist.

9. Airbaggehäuse nach einem der Ansprüche 1 bis 8, **dadurch gekennzeichnet, dass** der Zentrierzapfen (25) in einem dem Halteansatz (15) gegenüberliegenden Bereich des Bodens (17) angeformt ist.

10. Airbaggehäuse nach einem der Ansprüche 1 bis 9, **dadurch gekennzeichnet, dass** zumindest zwei zueinander beabstandete Rastzapfen (25) vorgesehen sind.

11. Airbaggehäuse nach einem der Ansprüche 1 bis 10, **dadurch gekennzeichnet, dass** die Befestigungsachsen (36) der Befestigungsstellen (35) in einem Winkel zwischen 0° und 45° zu einer durch eine Fahrebene aufgespannten Horizontalen ausgerichtet sind.

12. Kraftfahrzeug mit einem Airbaggehäuse nach einem der Ansprüche 1 bis 11 und einem unterhalb einer Armaturentafel (1) angeordneten als Querträger (2) ausgebildeten Trägerteil (3) zur Befestigung dieses Airbaggehäuses, **dadurch gekennzeichnet, dass** das im Querschnitt zylindrische Trägerteil (3) mit einem Haltewinkel (4) für das Airbaggehäuse (5) versehen ist, wobei der dem Zentrierzapfen (25) zugeordnete Schenkel (10) des Haltewinkels (4) doppelwandig ausgebildet ist und sich die eine Wandung (11) vom Trägerteil (3) ausgehend bis unterhalb der Gehäusewandung (6) erstreckt und rechtwinklig in einen Abstandssteg (12) mündet, an den sich die andere mindestens eine Zentrieröffnung (29) für den Zentrierzapfen (25) aufweisende, in Richtung des Trägerteils (3) verlaufende Wandung (13) anschließt, die in einen sich über den Durchmesser des Trägerteils (3) erstreckenden mit der Öffnung (31) für die Haltenase (30) versehenen Steg (14) mündet, an den sich der parallel zum Halteansatz (15) verlaufende Schenkel (16) anschließt, der über eine Abkröpfung (34) an dem Trägerteil (3) festgelegt ist.

13. Kraftfahrzeug nach Anspruch 12, **dadurch gekennzeichnet, dass** der dem Halteansatz (15) zugewandte Schenkel (16) mit mindestens einem Gewinde für die Schraubverbindung (21) versehen ist.

14. Kraftfahrzeug nach Anspruch 12 oder 13, **dadurch gekennzeichnet, dass** der dem Halteansatz (15) zugeordnete Schenkel (16) auf der dem Trägerteil (3) zugewandten Seite mindestens eine Schweißmutter (22) oder eine Nietmutter für die Schraubverbindung (21) aufweist.

15. Kraftfahrzeug nach einem der Ansprüche 12 bis 14, **dadurch gekennzeichnet, dass** der Haltewinkel (4) unlösbar an dem Trägerteil (3) befestigt ist.

16. Kraftfahrzeug nach Anspruch 12, **dadurch gekennzeichnet, dass** zwischen dem Haltewinkel (4) und dem Airbaggehäuse (5) im Bereich des Zentrierzapfens (25) ein elastisches Material (37) angeordnet ist.

## Claims

1. Air bag container which is designed for the fastening of at least two fastening means (35) spaced in relation to each other on the side of the car body on a support component (3) placed under an instrument panel (1) of a motor vehicle as cross member (2), wherein the fastening means (35) designed as plug-and-socket connection (26) and/or as screw connection (25) are oriented so that their fastening axles (36) branch off one parallel to the other at right angles compared to the shooting direction of an airbag, **characterized in that** the air bag container (5) is equipped with at least one holding handle (30) which engages with the respective opening (31) of the support component (3).

2. Air bag container according to claim 1, **characterized in that** the fastening means (35) are designed as plug-and-socket connection (26) and/or as screw connection (25).

3. Air bag container according to one of the claims 1 or 2, **characterized in that** on the pavement (17) of the air bag container (5) a support beginning (15) is fastened, which is attached to one longitudinal side (18), equipped with at least one borehole (19) for the screw connection (21) and with a spigot (25) attached to the opposite longitudinal side (3), parallel to the axle (28) of the borehole (19) for the plug-and-socket connection (26).

4. Air bag container according to claim 1, wherein on the pavement (17) of the air bag container (5) there is a support beginning (15) fastened, which is attached to one longitudinal side (18), equipped with at least one borehole (19) for the screw connection (21) and with a spigot (25) attached to the opposite longitudinal side (3), parallel to the axle (28) of the borehole (19) for the plug-and-socket connection (26), **characterized in that** the longitudinal side (33) equipped with the spigot (25) shaping in a part of the pavement (17) is parallel shaped and distanced in a rear position in comparison with an acceptance room (7) for a box wall (6) longitudinally limiting the air bag so that the free ending of the spigot (25) is positioned on the same level of the box wall (6) aligned with it.

5. Air bag container according to one of the claims 1 to 4, **characterized in that** the support beginning (15) and the spigot (25) are connected in one piece with the air bag container (5).

6. Air bag container according to one of the claims 1 to 5, **characterized in that** the support beginning (15) proceeds parallel and offset mounted in return to the respective longitudinally aligned box wall (6) of the air bag container (5) by going off the pavement (17).

7. Air bag container according to one of the claims 1 to 6, **characterized in that** the support beginning (15) is vertically aligned to the pavement (17).

8. Air bag container according to one of the claims 1 to 7, **characterized in that** a bush (20) is introduced into the borehole of the support beginning (15).

9. Air bag container according to one of the claims 1 to 8, **characterized in that** the spigot (25) is shaped inside the area of the pavement (17) opposite to the support beginning (15).

10. Air bag container according to one of the claims 1 to 9, **characterized in that** there are at least two rest pins (25) spaced in relation to each other.

11. Air bag container according to one of the claims 1 to 10, **characterized in that** the fastening axles (36) of the fastening means (35) are aligned in an angle between 0° and 45° to a horizontal line stretched by the driving level.

12. Motor vehicle equipped with an air bag container according to one of the claims 1 to 11, **characterized in that** and with a support component (3) aligned under an instrument panel (1) as cross member (2) for the fastening of this air bag container **characterized in that** the cylindrical support component (3) in its section is equipped with a support angle (4) for the air bag container (5) wherein the axle stub (10) assigned to the spigot (25) of the support angle (4) is equipped with a double wall wherein one of the walls (11) proceeds to the under part of the box wall (6) starting from the support component (3) and enters a distance bar (12) by forming a right angle, with which there is the another wall connected which is equipped at least with one centering opening (29) for the spigot (25), proceeds towards the direction of the support component (3) and enters a bar (14) proceeding over the diameter of the support component (3) and equipped with the opening (31) for the holding handle (30) with which an axle stub (16) proceeding in parallel to the support beginning (15) is connected wherein this axle stub is fastened on the support component (3) by means of a cranked section (34).

13. Motor vehicle according to claim 12, **characterized in that** the axle stub (16) turning to the axle stub (16) is equipped with at least one screw thread for the screw connection (21).

14. Motor vehicle according to claim 12 or 13, **characterized in that** the axle stub (16) attached to the support beginning (15) on the side turning to the support component (3) is equipped with at least one square weld nut (22) or a rivet for the screw connection (21).

15. Motor vehicle according to one of the claims 12 to 14, **characterized in that** the support angle (4) is non-detachably connected with the support component (3).

16. Motor vehicle according to claim 12, **characterized in that** between the support angle (4) and the air bag container (5) in the area of the spigot (25) there is an elastic material (37) aligned.

## Revendications

1. Boîtier de sac gonflable, qui est conçu pour la fixation de la carrosserie latérale à au moins deux points de fixation (35) distants l'un de l'autre, sur un support conçu (3) en dessous d'un tableau de bord (1) d'un véhicule automobile et monté en barre transversale (2), où les points de fixation (35) sous forme de connexion à fiches (26) et/ou en assemblage vissé (25) sont orientés de façon à ce que leurs axes de fixation (36) soient parallèles l'un à l'autre et perpendiculaires dans le sens de la trame d'un boîtier de sac gonflable, **caractérisé en ce que**, le boîtier de sac gonflable (5) présente au moins, sur son sol (17), un crochet de fixation (30), qui pénètre dans une ouverture correspondante (31) du support (3).

2. Boîtier de sac gonflable selon revendication 1, **caractérisé en ce que** les points de fixation (35) sont conçus sous forme de connexion à fiches (26) et/ou en assemblage vissé (25).

3. Boîtier de sac gonflable selon revendications 1 ou 2, **caractérisé en ce que** sur le sol (17) du boîtier de sac gonflable (5), un joint d'arrêt y est monté (15), celui-ci étant fixé sur le côté longitudinal (18) avec au moins un perçage (19) pour l'assemblage vissé (25) et un tenon de centrage (25) orienté face au côté longitudinal (3), parallèle à l'axe (28) de perçage pour les connexions à fiches (26).

4. Boîtier de sac gonflable selon revendication 1, où sur le sol(17) du boîtier de sac gonflable (5) un joint d'arrêt monté (15) sur un côté longitudinal (18) avec au moins un perçage (19) pour l'assemblage vissé (21) et un tenon de centrage (25) orienté face au côté longitudinal (3), parallèle à l'axe (28) de perçage (19) pour les connexions à fiches (26) est fixé, **caractérisé en ce que**, le tenon de centrage (25) formé au niveau du sol (17) présentant un côté longitudinal (33) bien parallèle et distant d'un espace récepteur (7) pour un sac gonflable, la paroi du boîtier limitée en position longitudinale (6) est formé, de façon à ce que l'extrémité libre du tenon de centrage (25) se trouve sur un niveau avec la paroi du boîtier (6).

5. Boîtier de sac gonflable selon revendications 1 à 4, **caractérisé en ce que** le début de support (15) et le tenon centrage (25) sont reliés d'une seule pièce au boîtier du sac gonflable (5).

6. Boîtier de sac gonflable selon revendications 1 à 5, **caractérisé en ce que** le début de support (15) s'étend parallèlement et est distant en arrière de la paroi du boîtier en position longitudinale (6) du boîtier du sac gonflable et qu'il part du sol (17).

7. Boîtier de sac gonflable selon revendications 1 à 6, **caractérisé en ce que** le début de support (15) s'étend verticalement au sol (17).

8. Boîtier de sac gonflable selon revendications 1 à 7, **caractérisé en ce qu'**une douille est montée dans le perçage du début de support (15).

9. Boîtier de sac gonflable selon revendications 1 à 8, **caractérisé en ce que** le tenon de centrage (25) est constitué au niveau du sol (17) face au début de support (15).

10. Boîtier de sac gonflable selon revendications 1 à 8, **caractérisé en ce qu'**au moins deux tenons d'arrêt distants l'un de l'autre sont prévus.

11. Boîtier de sac gonflable selon revendications 1 à 8, **caractérisé en ce que** les axes de fixation (36) des points de fixation (35) sont orientés suivant un angle de 0° à 45° sur une ligne horizontale étendue d'un point de vue du transport.

12. Véhicule automobile avec boîtier de sac gonflable selon revendications 1 à 11 constituant une partie support (3) montée en support transversal sous un tableau de bord (1) pour la fixation de ce boîtier de sac gonflable, **caractérisé en ce que** la partie support cylindrique et transversale (3) est pourvue d'un support d'angle (4) pour le boîtier de sac gonflable, où la branche du support d'angle (4)affecté au tenon de centrage (25) est constituée de doubles parois et une paroi partant du support (3) s'étend jusqu'au dessous de la paroi du boîtier (6) et débouche perpendiculairement sur une entretoise d'écartement (12); l'autre paroi,au moins une ouverture centrale (29) pour le tenon de centrage (25) se présentant en direction du support (3) s'y raccorde; celle-ci débouche sur une entretoise munie d'une ouverture (31) pour le crochet de fixation (30) au-dessus du diamètre du support (3), à laquelle se raccorde le bras parallèle au début de support (15), qui est fixé par un coude au support (3).

13. Véhicule automobile selon revendication 12, **caractérisé en ce que** le bras (16) tourné vers le début de support (15) est pourvu d'au moins un filetage pour l'assemblage vissé (21).

14. Véhicule automobile selon revendication 12 ou 13, **caractérisé en ce que** le bras (16) associé au début de support (15) sur le côté tourné au support présente au moins un écrou à souder (22) ou un écrou à sertir pour l'assemblage vissé (21).

15. Véhicule automobile selon revendication 12 à 14, **caractérisé en ce que** le support d'angle (4) est fixé au support de manière inséparable.

16. Véhicule automobile selon revendication 12, **caractérisé en ce qu'**un matériau élastique (37) est monté entre le support d'angle (4) et le boîtier du sac gonflable (5) au niveau du tenon de centrage (25).
